# EUROPEAN PATENT SPECIFICATION

(11) **EP 3 539 768 B1**
(45) Date of publication and mention of the grant of the patent: **12.05.2021**
(21) Application number: 19161845.3
(22) Date of filing: 11.03.2019
(51) Int. Cl.: B32B 27/08, B32B 27/16, B32B 27/30, B32B 27/32, B32B 27/36

(54) **MULTILAYER FILM**
MEHRSCHICHTIGE FOLIE
FILM MULTICOUCHES

(30) Priority: 13.03.2018 EP 18161559
(43) Date of publication of application: 18.09.2019
(73) Proprietor: Flexopack S.A., 194 00 Koropi (GR)
(72) Inventor: GINOSATIS, Dimitris, 19400 Koropi Attica (GR)
(74) Representative: Isarpatent

(56) References cited:
- US-A- 5 332 616
- US-A- 5 346 735
- US-A1- 2008 299 404

## Description

The invention relates to a multilayer plastic film with high permeability to oxygen, to the use of such films and to polymer packaging comprising said film.

### BACKGROUND

Plastic films are increasingly used for packing of different food species. Seafood is considered a food category with specific requirements as per the packing and distribution cycle, as under anaerobic conditions (e.g. vacuum) it may develop clostridium botulinum toxin, which may prove lethal to consumers. A way to avoid this is to keep the pack temperature at temperatures lower than 3 °C. This has proven to be unrealistic with the current distribution status especially after reaching the supermarket or retail point.

Based on this, the FDA has set a rule that a plastic film can be used for vacuum packing of seafood if the oxygen permeability of the pack, measured as per ASTM D3985 is higher than 10,000 cc/m2*atm*24h. It is a challenge for the skilled person to produce a film with high permeability while keeping its functional and organoleptic properties.

Thus, one problem of the present invention is to provide plastic films with sufficient oxygen permeability, while keeping at the same time the functional and organoleptic properties of the film. It is a further desired effect of the film to be able to be used in a thermoforming and/or a vacuum skin packaging process.

Thermoforming is a known packaging process in which a container (e.g. a tray) is formed by a plastic film in a mold by application of vacuum, air pressure or a plug under increased temperature. Then food is placed in the container and air is drawn from the packaging prior to sealing it close. Such vacuum packaging has very good storage and preservation characteristics.

Thermoforming process in general involves two packaging films
1. The top lid film which seals (often under vacuum) to the bottom film.
2. The bottom thermoformable film which is formed into a tray during the first step of the packing process and wherein the food is placed prior to the vacuum-seal step.
Vacuum skin packaging (VSP) is in one sense a type of thermoforming process in which an article to be packaged serves as a mold of the forming web. An article may be placed on a rigid or semi-rigid support member, that can be flat or shaped e.g. tray-shaped (herein referred as "bottom web") and the supported article is then passed to a chamber where a flexible film (herein referred as "top" or "skin" film) is first drawn against a heated dome and then draped down over the article. The movement of the top web is controlled by vacuum and/or air pressure and in a vacuum skin packaging arrangement, the interior of the container is vacuumized before final welding of the top web to the bottom web. The distinguishing feature of the vacuum skin package is that the upper heated film forms a tight skin around the product and is sealed to the part of the bottom web that is not covered by the product.

Because of the aesthetic appeal of the thermoforming and especially the VSP packs, it is highly desirable to pack seafood in these configurations. But as said before, the film must conform to the high oxygen permeability requirement.

Another desirable effect of the film is to be able to seal and peel directly to APET (amorphous PET) or PP (polypropylene) trays. This allows the packer to use simpler and cheaper trays than APET or PP laminated to a polyethylene based sealing layer that allows an efficient sealing between the bottom and top films.

Different approaches have been followed in order to develop such a film.

EP 1 599 337 A1 describes the use of a thick oxygen permeable layer alongside a thin seal layer and outer layer. The preferred oxygen permeable material is ethylene butyl acrylate copolymer which is known to be odorous. Thus there is a need to use odorless ethylene alpha olefin copolymers to keep the organoleptic properties. However, such polymers are challenging to process (e.g. the screw pressures are increased to a very high level). Thus also this problem must be handled by the person skilled in the art US5332616 discloses a multilayer suitable for packaging made of a core layer comprising a blend of ethylene butyl acrylate and very low density polyethylene, and two outer layers comprising an alpha olefin copolymer with a density of at least 0.916g/cc blended with an ethylene vinyl acetate copolymer, wherein the oxygen transmission of the multilayer is from 6000 to 10000cc/m2 according to ASTM 3985, and wherein the alpha olefin copolymer comprises linear low density polyethylene.

US 2007/0275196 A1 describes the use of styrenic rubbers in order to make such films stiffer and easier to process in the packing equipment e.g. in a Vertical Form-Fill-Seal (VFFS) machine. However, as these materials are known to be very sticky, their used in VSP equipment is questionable, given the adherence of the outer layer of the film to a heated dome.

Thus, it is an object of the present invention to avoid the above mentioned deficiencies of the known films and to provide a film with sufficient oxygen permeability, good organoleptic properties, efficient processing properties and sealability to an APET tray.

### SUMMARY OF THE INVENTION

The present invention provides a multilayer film comprising: an intermediate layer comprising an ethylene alpha olefin copolymer of density 0.855-0.895 in a blend with at least 10% LDPE per weight, an outer layer comprising an ethylene alpha olefin copolymer of density 0.92 to 0.950, a sealing layer comprising EMA and/or EVA.

Preferably the density of the ethylene alpha olefin copolymer of the intermediate layer is in the range 0.860 to 0.885 g/cc.

Preferably the film comprises an additional intermediate layer of a blend of ethylene alpha olefin copolymer and LDPE.

The present invention further relates to the use of the multilayer film according to the present invention as top lidding film and/or bottom film in a thermoforming process.

The present invention further relates to the use of the multilayer film according to the present invention for packaging food, preferably sea food.

In a further embodiment the present invention relates to a polymer packaging comprising a top lidding film and a bottom film, wherein the top lidding film is a multilayer film according to the invention, and as bottom film is also a multilayer film according to the present invention or APET.

The inventors found out that the above film has surprisingly a oxygen permeability of more than 10,000 cc/m²*atm*24 h measured according to ASTM D3985 at 23 °C and 0% relative humidity, more preferably of more than 11,000 cc/m²*atm*24h.

### DEFINITIONS

As used herein, the term "plastic film" or simply "film" refers to a flat or tubular flexible structure of thermoplastic material.

The term "bottom film" refers to a film which is converted to a formed flexible tray during thermoforming process.

The term "top lidding film" or simply "top film" refers to a film which seals to the bottom film during the thermoforming process.

The term "skin film" refers to a film that forms and drapes over a food product during the VSP process.

The term "outer layer" refers to the film that is in immediate contact with the outside environment (atmosphere).

The term "inner layer" refers to the film that comes in contact with the product packed. It is also called "sealing layer" as this layer must be hermetically sealed in order to protect the product from ingress of air.

The term "intermediate layer" refers to any layer of the film that is neither the outer nor the inner layer. A film may comprise more than one intermediate layer.

As used herein the term "homopolymer" refers to a polymer resulting from polymerization of single monomers.

As used herein, the term "copolymer" refers to a polymer resulting from polymerization of at least two different monomers.

As used herein, the term "polymer" includes both types of homopolymers and copolymers.

As used herein, the term "polyolefin" includes all the products produced by polymerization of olefins. Polyethylene and polypropylene homopolymers and copolymers are the most common polyolefins.

As used herein, the term "polyethylene" identifies polymers comprising basically ethylene repeating units. Polyethylene homopolymers may be HDPE (high density polyethylene) or LDPE (low density polyethylene) as well known in the art.

As used herein the term "ethylene alpha olefin copolymers" refers to copolymers of ethylene with butene, hexene, octene or other alkenes. Such polymers are linear low density polyethylene (LLDPE), medium density polyethylene (MDPE), very low density polyethylene (VLDPE), ultra-low density polyethylene (ULDPE), metallocene catalyzed polyethylene and polyethylene plastomers and elastomers.

In the scope of the present application, the term "copolymer" may include the maleic anhydride modified polymers, often used as adhesives to bond dissimilar materials.

As used herein the term "homogeneous ethylene alpha olefin copolymers" refer to ethylene alpha olefin copolymers having a molecular weight distribution (Mw/Mn) of less than 2.7 as measured by GPC.

As used herein the term "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers and the like.
As used herein the term "ethylene methacrylate copolymers" refers to polymers of ethylene and methacrylate. EMA is abbreviation for this polymer.

As used herein the term "ethylene butyl acrylate" refers to polymers of ethylene and butyl acrylate. EBA is abbreviation for this polymer.

As used herein the term "ethylene vinyl acetate copolymers" refers to polymers of ethylene and vinyl acetate. EVA is abbreviation for this polymer.

As used herein the term "ethylene vinyl alcohol" or EVOH refers to saponified products of ethylene vinyl acetate polymers. The ethylene content is typically in the range of 25 to 55% per mol.

As used herein the term PVDC refers to vinylidene chloride copolymer wherein a major amount of the copolymer comprises vinylidene chloride and a minor amount of the copolymer comprises one or more monomers such as vinyl chloride and or/alkyl acrylates and methacrylates.

As used herein the term "polyamide" refers to well-known polymers such as polyamide 6, polyamide 66, polyamide 610, polyamide 6/66, polyamide 6/12, polyamide 11, polyamide 12, polyamide 6/66/12, polyamide 6/66/11, amorphous polyamides, aromatic polyamides and others.

As used herein, the term "ionomer" refers to ethylene-acid copolymers which have been neutralized by metal cations such as sodium, zinc, lithium or others. The acid used is usually methacrylic or acrylic acid.

As used herein the term "ethylene acid copolymer" refers to copolymers of ethylene with acid, most usually methacrylic or acrylic acid.

As used herein, the term "polyester" includes polymers such as PET (polyethylene terephthalate) in amorphous, semi crystalline or crystalline state, PETG (glycol modified polyethylene terephthalate), PBT (polybutylene terephthalate, PTT (polytrimethylene terephthalate), PBN (polybutylene naphthalate), PEN (polyethylene naphthalate), polyester block copolymers and others.

As used herein the term "polybutylene" refers to butene-1 homopolymers and copolymers. As used herein the term "cycloolefin copolymers" refers to copolymers of olefins with cyclic monomers such as norbornene.

As used herein the term "hot blown film" refers to a film production process where the film is oriented from the melt state. The hot blown film may be cooled by air, water or other cooling media. Tubular dies as well known in the art are used for this process as opposed to cast production process.

### DETAILED DESCRIPTION OF THE INVENTION

The present invention provides a multilayer film comprising an intermediate layer comprising an ethylene alpha olefin copolymer of density 0.855-0.895 in a blend with at least 10% LDPE per weight, an outer layer comprising an ethylene alpha olefin copolymer of density 0.92 to 0.950, a sealing layer comprising EMA and/or EVA.

Preferably, the density of the ethylene alpha olefin copolymer of the intermediate layer is in the range 0.860 to 0.885 g/cc.

In a further preferred embodiment the multilayer film comprises an additional intermediate layer of a blend of ethylene alpha olefin copolymer and LDPE.

The multilayer film has an oxygen permeability of more than 10,000 cc/m²*atm*24h as measured according to ASTM D3985 at 23°C and 0% relative humidity, and more preferably an oxygen permeability of more than 11,000 cc/m²*atm*24h as measured according to ASTM D3985 at 23°C and 0% relative humidity.

The present invention further relates to the use of the multilayer film according to the present invention as top lidding film and/or bottom film in a thermoforming process.

The present invention further relates to the use of the multilayer film according to the present invention for packaging food, preferably sea food.

In a further embodiment the present invention relates to a polymer packaging comprising a top lidding film and a bottom film, wherein the top lidding film is a multilayer film according to the invention, and as bottom film is also a multilayer film according to the present invention or APET.

Preferably the film is produced by the hot blown film method.

Preferably the film is of the structure:
OUTER LAYER/INTERMEDIATE LAYER/SEALING LAYER
   or
OUTER LAYER/INTERMEDIATE LAYER1/INTERMEDIATE LAYER 2/INTERMEDIATE LAYER 3/SEALING LAYER
   or
OUTER LAYER/INTERMEDIATE LAYER1/INTERMEDIATE LAYER 2/INTERMEDIATE LAYER 3/INTERMEDIATE LAYER 4/ INTERMEDIATE LAYER 5/ SEALING LAYER
or films with more than seven layers, e.g. up to 20 layers, comprising additional INTERMEDIATE LAYERs.

The intermediate layers may have the same or different compositions.

The film of the present invention may have a thickness from 14 to 120 microns, preferably 50 to 90 microns, even more preferably 60 to 80 microns.

### Sealing laver

The sealing layer comprises EVA and/or EMA. Appeel® from Dupont or Lotryl® Bestpeel from Arkema are preferred.

The sealing layer must be sealable to APET. This means that the heat seal strength of the film to APET trays must be more than 2N/15 mm in at least a temperature of range 120-200 °C under a typical heat seal time of 2 seconds and seal pressure of 3 bars. The two films are heat sealed and the seal strength is measured at a 15 mm width according to ASTM F88.

### Intermediate layers

The film comprises at least one intermediate layer comprising a blend of an ethylene alpha olefin copolymer of density 0.855-0.895 g/cc and at least 10% wt of low density polyethylene (LDPE). Preferably the density of the ethylene alpha olefin copolymer is from 0.860 to 0.885 g/cc.

Preferably, at least a second intermediate layer comprises an ethylene alpha olefin copolymer of density 0.855-0.895 g/cc in a blend with LDPE.

The film may comprise further intermediate layers comprising ethylene alpha olefin copolymer of density 0.855-0.895 g/cc, preferably the density is from 0.860 to 0.885 g/cc.

The use of LDPE in the blends with such low density alpha olefin copolymers improve
- the melt strength of the film
- processing of the film
- renders it somewhat stiffer, thus easier to handle in a VSP process

### Outer laver

The outer layer comprises an ethylene alpha olefin copolymer of density 0.920 to 0.950. Using an ethylene alpha olefin copolymer with said specific density of 0.920 to 0.950 the film works in the proximity of a heated dome (VSP process) while surprisingly the oxygen permeability is maintained at high levels.

Preferably the thickness of the outer layer is less than 5 microns, more preferably less than 3 microns.

### Crosslinking of the film

The film preferably undergoes ionizing radiation crosslinking in a dose of at least 5 megarads. Gamma radiation crosslinking is also possible.

Preferably the film is produced by the hot blown film method.

### EXAMPLES

In a commercial blown film line, the following plastic films were produced

### Example 1

| | | |
|---|---|---|
| Outer layer | 98%EAO1 + 2% slip antiblock additives | 2 microns |
| Intermediate layer 1 | 85% EAO2 + 15% LDPE | 30 microns |
| Intermediate layer 2 | 95% EAO2 + 5% LDPE | 10 microns |
| Intermediate layer 3 | 95% EAO2 + 5% LDPE | 3 microns |
| Intermediate layer 4 | 100% EAO2 | 7 microns |
| Intermediate layer 5 | 100% EAO2 | 7 microns |
| Sealing layer | EMA1 | 10 microns |

| | | |
|---|---|---|
| EAO1= an ethylene hexene copolymer of density 0.934 EAO2= an ethylene octene copolymer of density 0.870 LDPE= a low density polyethylene of density 0.924 EMA1 = An EMA based peel seal material | | |

Production of the film (sample 1) was stable with no processing issues.

### Example 2

| | | |
|---|---|---|
| Outer layer | 98%EAO1 + 2% slip antiblock additives | 2 microns |
| Intermediate layer 1 | 100% EAO2 | 30 microns |
| Intermediate layer 2 | 95% EAO2 + 5% LDPE | 10 microns |
| Intermediate layer 3 | 95% EAO2 + 5% LDPE | 3 microns |
| Intermediate layer 4 | 80% EAO2 + 20% LDPE | 7 microns |
| Intermediate layer 5 | 100% EAO2 | 7 microns |
| Sealing layer | EMA1 | 10 microns |

Production of the film (sample 2) was stable with no processing issues.

### Example 3

Same film as example 2 but all intermediate layers contained 100% EAO2 and no LDPE.

In Example 3 a deterioration of the processing behavior of the film was noticed. There were frequent breakages possibly due to the inadequate melt strength of the film. Further to this the extruder pressures increased substantially and the line productivity significantly decreased.

Prior to further testing both samples 1 and 2 were irradiated at a dose of 12 MRads.

### EVALUATION OF EXAMPLES

The above irradiated samples were tested at a commercial thermoforming machine and a commercial VSP machine.

Both films were tested as both top lidding films and bottom films in thermoforming. Surprisingly, both films could function as both top lidding and bottom films.

Both films were tested as skin films with good results. Irradiated sample 1 was sealed to APET to form pack 1. Irradiated sample 2 was sealed to APET to form pack 2.

Sealing strength to APET sheet was measured in Instron machine per 15 mm width according to ASTM F88.

Seal strength of pack1 and of pack 2 was average 6N/15 mm. There were no leakages and unsealed areas.

### Organoleptic test

A panel of five people evaluated the smell of the films in comparison to a commercial high barrier VSP film of FLEXION series. It was concluded that the organoleptic properties of the film were similar to the commercial film (acceptable).

### Oxygen permeability test

Both films were tested as per oxygen permeability according to ASTM D3985 at conditions 23 °C, 0% RH.

Film 1 had an oxygen permeability of 11,200 cc/m²*atm*24h while film 2 showed an oxygen permeability of 11,800.

## Claims

1. A multilayer film comprising:
an intermediate layer comprising an ethylene alpha olefin copolymer of density 0.855-0.895 in a blend with at least 10% LDPE per weight
an outer layer comprising an ethylene alpha olefin copolymer of density 0.92 to 0.950 a sealing layer comprising EMA and/or EVA,
wherein the multilayer film has an oxygen permeability of more than 10,000 cc/m²*atm*24h as measured according to ASTM D3985 at 23°C and 0% relative humidity.

2. The multilayer film according to claim 1, wherein the density of the ethylene alpha olefin copolymer of the intermediate layer is in the range 0.860 to 0.885 g/cc.

3. The multilayer film according to any of the preceding claims, wherein the film comprises an additional intermediate layer of a blend of ethylene alpha olefin copolymer and LDPE.

4. The multilayer film according to claim 1, wherein the film has an oxygen permeability of more than 11,000 cc/m²*atm*24h as measured according to ASTM D3985 at 23°C and 0% relative humidity.

5. Use of a multilayer film according to any of the preceding claims as top lidding film and/or bottom film in a thermoforming process.

6. Use of a multilayer film according to any of the claims 1 to 4, for packaging food, preferably sea food.

7. Polymer packaging comprising a top lidding film and a bottom film, wherein the top lidding film is a multilayer film according to any of claims 1 to 4, and as bottom film is also a multilayer film according to any of claims 1 to 4 or APET.

## Patentansprüche

1. Mehrschichtfolie, umfassend:
eine Zwischenschicht, enthaltend ein Ethylen-alpha-Olefin-Copolymer mit einer Dichte von 0,855 bis 0,895 in einer Mischung mit mindestens 10 Gew.-% LDPE,
eine Außenschicht, enthaltend ein Ethylen-alpha-Olefin-Copolymer mit einer Dichte von 0,92 bis 0,950,
eine Siegelschicht, enthaltend EMA und/oder EVA,
wobei die Mehrschichtfolie eine Sauerstoffpermeabilität von mehr als 10.000 cm³/m² •24h•atm aufweist, gemessen gemäß ASTM D3985 bei 23 °C und 0 % relativer Feuchtigkeit.

2. Mehrschichtfolie nach Anspruch 1, wobei die Dichte des Ethylen-alpha-Olefin-Copolymers der Zwischenschicht im Bereich von 0,860 bis 0,885 g/cm³ liegt.

3. Mehrschichtfolie nach einem der vorhergehenden Ansprüche, wobei die Folie eine zusätzliche Zwischenschicht einer Mischung aus Ethylen-alpha-Olefin-Copolymer und LDPE umfasst.

4. Mehrschichtfolie nach Anspruch 1, wobei die Folie eine Sauerstoffpermeabilität von mehr als 11.000 cm³/m² •24h•atm aufweist, gemessen gemäß ASTM D3985 bei 23 °C und 0 % relativer Feuchtigkeit.

5. Verwendung einer Mehrschichtfolie gemäß einem der vorhergehenden Ansprüche als obere Deckfolie und/oder Bodenfolie in einem Tiefziehverfahren.

6. Verwendung einer Mehrschichtfolie nach einem der Ansprüche 1 bis 4 zum Verpacken von Lebensmitteln, vorzugsweise Meerestiere.

7. Polymerverpackung, umfassend eine obere Deckfolie und eine Bodenfolie, wobei die obere Deckfolie eine Mehrschichtfolie nach einem der Ansprüche 1 bis 4 ist und die Bodenfolie auch eine Mehrschichtfolie nach einem der Ansprüche 1 bis 4 oder APET ist.

## Revendications

1. Film multicouche comprenant :
une couche intermédiaire comprenant un copolymère d'éthylène et d'alpha oléfine de densité 0,855 à 0,895 dans un mélange avec au moins 10 % de LDPE en poids,
une couche extérieure comprenant un copolymère d'éthylène et d'alpha oléfine de densité 0,92 à 0,950,
une couche d'étanchéité comprenant de l'EMA et/ou de l'EVA,
ledit film multicouche ayant une perméabilité à l'oxygène supérieure à 10 000 cm³/m² •24h•atm telle que mesurée selon la norme ASTM D3985 à 23 °C et 0 % d'humidité relative.

2. Film multicouche selon la revendication 1, dans lequel la densité du copolymère d'éthylène et d'alpha oléfine de la couche intermédiaire est dans la plage de 0,860 à 0,885 g/cm³.

3. Film multicouche selon l'une quelconque des revendications précédentes, ledit film comprenant une couche intermédiaire supplémentaire à base d'un mélange de copolymère d'éthylène et d'alpha oléfine et de LDPE.

4. Film multicouche selon la revendication 1, ledit film ayant une perméabilité à l'oxygène supérieure à 11 000 cm³/m² •24h•atm telle que mesurée selon la norme ASTM D3985 à 23 °C et à 0 % d'humidité relative.

5. Utilisation d'un film multicouche selon l'une quelconque des revendications précédentes en tant que film d'operculage supérieur et/ou film inférieur dans un procédé de thermoformage.

6. Utilisation d'un film multicouche selon l'une quelconque des revendications 1 à 4, pour emballer de la nourriture, de préférence des produits de la mer.

7. Emballage polymère comprenant un film d'operculage supérieur et un film inférieur, dans lequel le film d'operculage supérieur est un film multicouche selon l'une quelconque des revendications 1 à 4, et en tant que film inférieur c'est également un film multicouche selon l'une quelconque des revendications 1 à 4 ou de l'APET.
